# EUROPÄISCHE PATENTSCHRIFT

(11) **EP 0 639 410 B1**
(45) Veröffentlichungstag und Bekanntmachung des Hinweises auf die Patenterteilung: **15.04.1998**
(21) Anmeldenummer: 94112935.5
(22) Anmeldetag: 18.08.1994
(51) Int. Cl.: B09B 5/00

(54) **Verfahren zur Analyse von Zerlegungsvorgängen von Produkten**
Method of analyzing product dismantling processes
Procédé pour l'analyse des procédés de démontage de produits

(30) Priorität: 20.08.1993 DE 4328124
(43) Veröffentlichungstag der Anmeldung: 22.02.1995
(73) Patentinhaber: SIEMENS AKTIENGESELLSCHAFT, 80333 München (DE)
(72) Erfinder: Ebach, Herbert, Dr., D-90552 Röthenbach (DE); Streibelt, Helmuth, D-90473 Nürnberg (DE)

(56) Entgegenhaltungen:
- ASSEMBLY AUTOMATION, Bd. 12, Nr. 2, 1992 BRADFORD GB, Seiten 21-25, WITTENBERG: 'Life after death for consumer products - Designing for disassembling'
- PE PLAST EUROPE, Nr. 4, September 1992 MUNCHEN DE, Seiten 436-437, KAHMEYER ET AL: 'Dismantling facilitated'

## Beschreibung

Die Erfindung bezieht sich auf ein Verfahren zur Entwicklung zerlegegerechter Produkte oder Produktgruppen, insbesondere von aus einer Mehrzahl von Einzelteilen zusammengebauten Gerätschaften, die nach Ablauf der Gebrauchsdauer durch mechanische Bewegungen von Produktteilen und/oder Technologieeinsatz an Produktteilen fraktioniert werden.

Aufgrund zurückgehender Ressourcen rückt die Notwendigkeit des sparsamen Umgangs mit Rohstoffen zunehmend in den Blickpunkt der Öffentlichkeit. Die technologische Entwicklung führt heute dazu, daß Industrieprodukte immer komplexer werden und aus vielen Einzelteilen der unterschiedlichsten Werkstoffe bestehen. Zukünftig sind deshalb bei der Entwicklung neuer Geräte die Gesichtspunkte der späteren umweltverträglichen Verwertung nach dem Ablauf der Gebrauchsdauer zu berücksichtigen. Die Substitution umweltgefährdender Stoffe, die Erhöhung der Reparaturfreundlichkeit und als Voraussetzung dafür einfache Demontage- bzw. Zerlegemöglichkeiten bei der Verwendung wiederverwertbarer Produktteile und Materialien sind Forderungen, die alle Teile des Produktspektrums beeinflussen.

Ziel eines übergreifenden Produktrecyclings ist die demontage- und entsorgungsfreundliche Konstruktion von Produkten mit umweltschonenden Werkstoffen. Eine Analyse der dafür notwendigen Zerlegevorgänge hat Auswirkung auf die Entwicklung, Fertigung und Logistik des jeweiligen Produktes. Insbesondere vermeidet eine geordnete Zerlegung von aus einer Vielzahl von Einzelteilen zusammengebauten Gerätschaften den Anfall großer Mengen gemischter Abfallstoffe und bietet zudem die Möglichkeit einer Wiederverwertung von Altteilen nach ihrer entsprechenden Aufbereitung. Dafür ist ein kostengünstiges Zerlegen, d.h. die sogenannte Zerlegegerechtheit oder auch Zerlegefreundlichkeit, wichtige Voraussetzung.

Bisher war eine Bewertung der Produkte bezüglich ihrer Zerlegegerechtheit meist nur intuitiv möglich. Eine solche Bewertung war dann aber von der die Bewertung durchführenden Person abhängig. Auch entstand keine standardisierte Dokumentation, die diese Bewertung erläuterte bzw. dokumentierte. Somit war kein objektiver Vergleich zwischen verschiedenen Produkten möglich und es konnte keine zielgerichtete Produktentwicklung hin zu zerlegegerechten Produkten betrieben werden.

Aus PE Plast Europe, Nr. 4, Sept. 1992, München (DE), Seiten 436, 437 sind Richtlinien für die Entwicklung zerlegegerechter Produkte und Produktgruppen bekannt. Diese Richtlinien sehen eine Einteilung in manuelle Zerlegeschritte und in automatische Zerlegeschritte vor, wobei den einzelnen Schritten gleichzeitig auch noch Wertigkeiten A = sehr wichtig, B = wichtig und C = weniger wichtig zugeordnet werden.

Der Erfindung liegt die Aufgabe zugrunde, ein Verfahren zur Entwicklung zerlegegerechter Produkte oder Produktgruppen zu schaffen, bei welchem eine Analyse der nach Ablauf der Gebrauchsdauer vorzunehmenden Zerlegevorgänge bereits in der Entwicklungsphase zur Gestaltung der Produkte oder Produktgruppen herangezogen wird.

Diese Aufgabe wird durch die im Patentanspruch 1 angegebenen Merkmale gelöst.

Dadurch, daß jedem Zerlegeschritt und/oder Technologieeinsatz eine Wertigkeit zugeordnet wird und eine Zusammenfassung gleicher Wertigkeiten zu Bewertungsgruppen vorgenommen wird, läßt sich eine Sollkurve für die Zerlegung von Produkten oder Produktgruppen ableiten. Solche Sollkurven sind produktspezifisch und werden demzufolge bereits bei der Konstruktion des Produktes oder der Produktgruppe vorgegeben.

Vorteilhaft ist bei der Erfindung, daß nunmehr die Produktzerlegung am Ende der Nutzungsdauer des Produktes Grundlage für die Produktentwicklung ist. Das erfindungsgemäße Verfahren ist also bereits in der Entwurfsphase eines Produktes anzuwenden und liefert quantifizierbare Ergebnisse, die verbesserungswürdige Punkte bei der Konstruktion aufzeigen. Das Verfahren ist schnell und leicht anwendbar, wobei durch eine Ergebnisdokumentation eine Vergleichsmöglichkeit mit ähnlichen Produkten gegeben ist.

Weitere Einzelheiten und Vorteile der Erfindung ergeben sich aus der nachfolgenden Figurenbeschreibung von Ausführungsbeispielen anhand der Zeichnung in Verbindung mit den weiteren Patentansprüchen.

Es zeigen die
- Figur 1: eine Sollkurve für die Demontage,
- die Figuren 2 und 3: zwei unterschiedliche Anwendungsbeispiele für zwei Versionen eines einfachen Produktes und
- Figur 4: die zugehörigen Kurven für eine Solldemontage einerseits und von Istdemontagen bei den Produktversionen gemaß Figur 2 und 3 andererseits.

Die meisten Produkte bestehen aus einer Mehrzahl von einzelnen Produktelementen. Insbesondere in der Elektrotechnik sind Gerätschaften meist aus einer Vielzahl von Einzelteilen zusammengebaut, die nach der Gerätelebensdauer entsorgt werden müssen. Dazu kommt einerseits eine Demontage ("disassembling") und andererseits ein Zerlegen ("dismantling") in Frage. Die Demontage kennzeichnet im Rahmen des Recyclings also einen reversiblen und die Zerlegung einen irreversiblen Vorgang.

Das neue Verfahren analysiert das Zerlegen des Produktes in einzelne Baugruppen bzw. Einzelteile. Dabei werden Art und Anzahl der Zerlegebewegungen, die dabei auftretenden Zerlegeschwierigkeiten und die Anzahl der Teile bzw. Baugruppen berücksichtigt. Gegebenenfalls hat dabei auch die Abfolge der Zerlegebewegungen einen bestimmenden Einfluß auf die Bewertung.

Die über die Zerlegebewegungen erreichte Demontagetiefe ist unmittelbar abhängig von der Anzahl der eingesetzten und zu trennenden Werkstoffarten. Die Bewertung erfolgt deshalb nicht pauschal, sondern auf der Basis einer vorher durchzuführenden Zerlegungsanalyse.

Die Analyse bewertet die Bewegung der Einzelteile bei der Zerlegung und die dabei auftretenden Erschwernisse. Zur Bewertung stehen dafür zwölf Symbole mit einer entsprechenden Wichtung untereinander zur Verfügung: Dabei wird davon ausgegangen, daß im Idealfall ein Teil durch eine einzige senkrechte, aufwärts gerichtete Bewegung ohne Werkzeugeinsatz oder Kraftaufwand demontiert werden kann.

Für diesen Idealfall liegt die höchste Bewertung vor, beispielsweise werden p = 100 Punkte vergeben. Alle davon abweichenden Elemente stellen eine Verschlechterung dar. Demgemäß ist ihren Symbolen eine geringere Wertigkeit zuzumessen, beispielsweise ein Punktabzug von der Maximalpunktzahl zugeordnet.

Kommt bei der Zerlegung eines Teiles mehr als ein Symbol zur Anwendung, so stellt dies ein Zerlegeerschwernis dar. Letzteres wird durch einen Kompensationsfaktor α berücksichtigt. Die Berechnung von α kann empirisch aus der Zahl der verwendeten Symbole erfolgen und dadurch beispielsweise den Punktabzug erhöhen. Mit Hilfe der errechneten Punktzahl läßt sich die Demontagegerechtheit für ein Produkt ermitteln und insbesondere im Vergleich verschiedener Varianten untereinander beurteilen. Mit steigender Teile- oder Baugruppenzahl einer Gerätschaft, die wegen ihrer unterschiedlichen Werkstoffe zerlegt werden muß, erhöhen sich mit der Demontagetiefe auch die damit verursachten Kosten. Eine Kennziffer bei der Bewertung für die Gesamtkonstruktion kann daher den Wert der Teilezahl berücksichtigen.

In der Tabelle sind die möglichen Demontageelemente zusammengefaßt. Dabei ist in der ersten Spalte jeweils ein Symbol, in der zweiten Spalte eine Kennziffer mit der Anzahl des von der Normpunktezahl von 100 vorzunehmenden Punkteabzuges und in der dritten Spalte der Gegenstand des Demontageelementes angegeben. Entsprechend der Schwierigkeit des jeweiligen Demontageelementes lassen sich zur Vereinfachung Bewertungsgruppen schaffen, die jeweils gleichwertige Demontageelemente zusammenfassen.

Wie bereits erwähnt, sind beim Zerlegevorgang insbesondere geradlinige, einfache Zerlegebewegungen wichtig. Sie sollen im Idealfall ohne Kraftaufwand und ohne Einsatz von Maschinen und Spezialeinrichtungen erfolgen. Aufbauend auf bekannten Verfahren zur montagegerechten Konstruktion und Produktion werden solche Demontagebewegungen als erste Gruppe der Zerlegeschritte übernommen. Zu dieser Bewegungserfassung kommen aber nunmehr noch Merkmale für Zerlegeschwierigkeiten hinzu, die in der zweiten Gruppe angegeben sind. Somit stehen für die Bewertung der Zerlegebewegungen und der auftretenden Erschwernisse insgesamt zwölf Bewertungssymbole zur Verfügung.

Durch Erfassung der einzelnen Teilschritte läßt sich ein Zerlegeablauf mit allen dabei auftretenden Schwierigkeiten in einer Analyse festhalten und mittels eines Programms wichten. Speziell für die Beurteilung der Konstruktion einer Gerätschaft und von Alternativversionen wird weiterhin zusätzlich als weitere Kenngröße das Zerlegungskostenverhältnis angegeben. Es kann berechnet werden, wenn von einem Vergleichsprodukt bereits eine Analyse der Zerlegungsschritte vorliegt. Sofern die tatsächlichen Kosten für die Zerlegung des Vergleichsproduktes bekannt sind, kann daraus auch auf die Kosten für die Zerlegung des zu beurteilenden Produktes geschlossen werden. Somit kann jeweils der aktuelle Stand der Recyclingtechnologie bei der Neukonstruktion von Produkten berücksichtigt werden. Beispielsweise durch Werkstoffauswahl und/oder eine wohlüberlegte Baugruppengestaltung und -anordnung im Gerät sowie integrierte Verbindungselemente lassen sich niedrige Demontagetiefen erreichen.

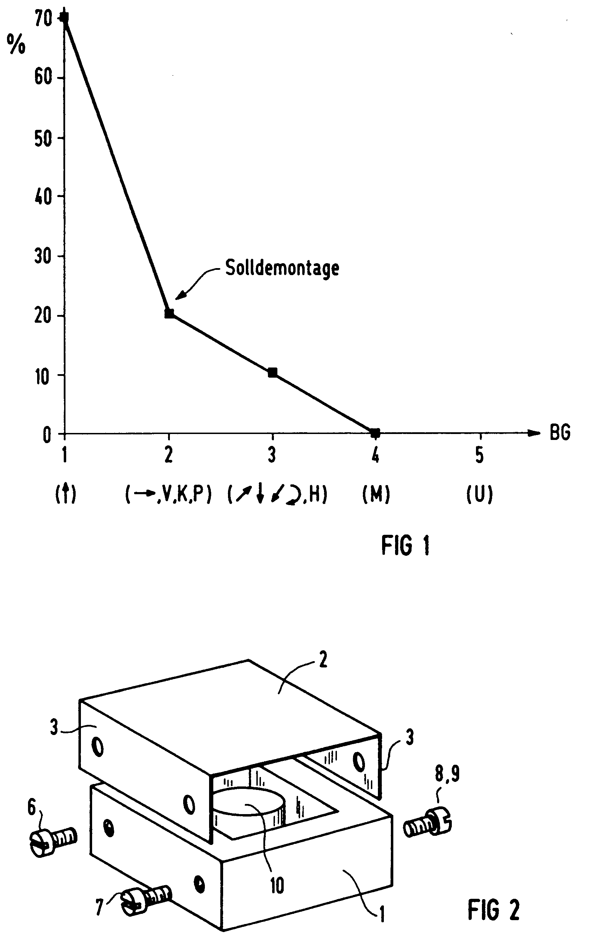

In Figur 1 ist eine Sollkurve für ein nicht näher spezifiziertes Produkt vorgegeben. Hier sind erfaßte Zerlegebewegungen sowie Merkmale für Zerlegeschwierigkeiten gewichtet und in fünf Bewertungsgruppen zusammengefaßt. Es ergeben sich beispielsweise Anteile der einzelnen Bewertungsgruppen an der Gesamtdemontage von 70 %, 20 %, 10 % und 0 %. Unlösbare Verbindungen und Maschineneinsatz sollten daher im Sinne einer kostengünstigen Zerlegung von vornherein vermieden werden.

In Figur 2 ist ein Gehäuse mit 1 bezeichnet, das Seitenflächen 2 hat und beispielsweise zur Aufnahme einer Batterie 10 dient. Das Gehäuse soll von einem Deckel 3 mit Seitenlaschen 4 dicht abgeschlossen werden, wobei die Seitenlaschen 4 mittels vier Schrauben 5 bis 9 an den beiden gegenüberliegenden Seitenflächen 2 des Gehäuses befestigt sind.

Der Zerlegeablauf sieht im Beispiel der Figur 2 zunächst ein Herausdrehen der vier Deckelschrauben 5 bis 9 vor, wobei bei festgezogenen Schrauben ein Werkzeugeinsatz, insbesondere unter Kraftaufwand die Anwendung eines Schraubenziehers, notwendig ist. Anschließend kann der Deckel 2 abgehoben werden, worauf die Batterie durch eine senkrechte Bewegung herausnehmbar ist. Das Gehäuse ist dann durch beliebige Maßnahmen, insbesondere senkrechte Bewegung, manipulierbar.

Die Bewertung geht im Fall der Figur 2 von sieben Einzelteilen aus, wobei für die vier Schrauben die Demontageelemente eine Horizontalbewegung (↑) mit Kraft- (K) und Werkzeugeinsatz (P) vorliegt. Für die Teilegehäuse 1, Deckel 3 und Batterie 10 liegen als Demontageelemente jeweils eine Vertikalbewegung (↑) vor. Eine normierte Punktvergabe ergibt in diesem Fall eine Demontagebewertung D = 55.

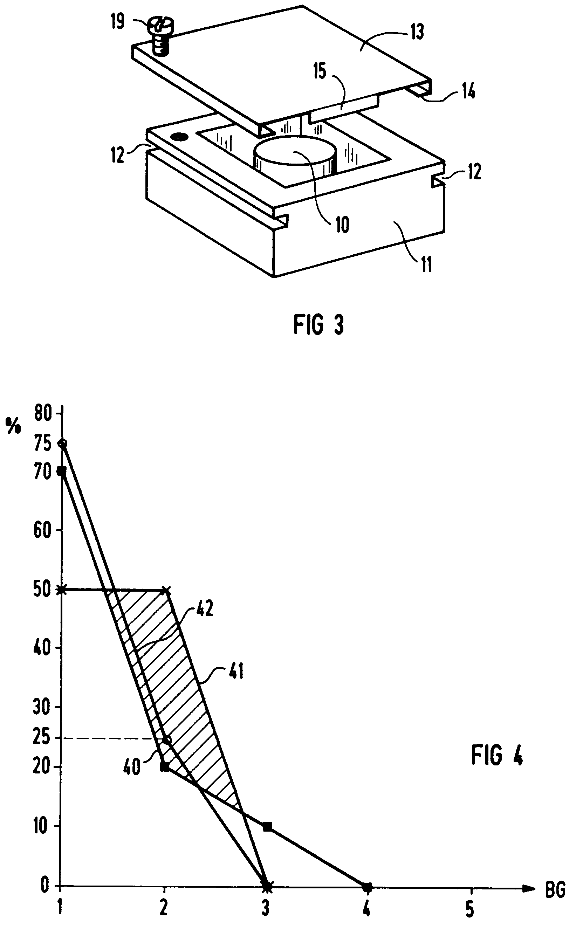

In Figur 3 ist ein Gehäuse 11 zur Aufnahme der gleichen Batterie 10 wie in Figur 2 derart ausgebildet, daß es durch einen in Parallelnuten 12 der Gehäuseseitenwände geführten Schiebedeckel 13 verschlossen werden kann. Dazu hat der Schiebedeckel 13 abgekröpfte Seitenlaschen 14 und weiterhin einen Anschlag 15. Zum Fixieren des formschlüssig geführten Schiebedeckels ist in diesem Fall nur eine handbetätigbare Schraube 19, beispielsweise Rändelschraube, vorhanden.

Der Zerlegeablauf sieht im Beispiel der Figur 3 vor, daß zunächst die einzige Schraube 19 ohne Werkzeugeinsatz gelöst wird. Anschließend kann der Deckel 13 horizontal abgezogen werden, worauf die Batterie 10 wieder durch eine senkrechte Bewegung herausnehmbar werden. Das Gehäuse 11 ist dann entsprechend Figur 2 durch beliebige Maßnahmen, insbesondere senkrechte Bewegung, manipulierbar.

Bei der Bewertung wird in diesem Fall von vier Einzelteilen ausgegangen, wobei die Demontageelemente für die Schraube 19, das Gehäuse 11 und die Batterie 10 senkrechte Bewegungen (↑) sind und das Demontageelement für den Schiebedeckel eine Horizontalbewegung (→ ) ist. Es ergibt sich in diesem Fall bei entsprechend normierter Punktevergabe eine Demontagebewertung von 95.

In der Figur 4 sind entsprechend den Beispielen der Figuren 2 und 3 ermittelte Ist-Demontagekurven 41 und 42 zusammen mit der Soll-Demontagekuve 40 dargestellt. Es zeigt sich, daß bei der Zerlegung des Gerätes gemäß Figur 2 der Graph 41 bei Bewertungsgruppe 1 und 2 jeweils bei 50 % liegt, während bei Zerlegung des Gerätes nach Figur 3 der Graph 42 von 75 % bei Bewertungsgruppe 1 zu 25 % bei Bewertungsgruppe 2 verläuft. Anschließend fallen beide Graphen 41 und 42 auf Null ab, wogegen bei der Sollkurve 40 bei Bewertungsgruppe 3 ein Wert von 10 % und erst bei den Bewertungsgruppen 4 und 5 der Nullwert vorliegt.

Aus dem Vergleich der Graphen 41 und 42 wird deutlich, daß das Gerät gemäß Figur 3 einer Zerlegung besser zugänglich ist als das Gerät gemäß Figur 2. Dies ergibt sich insbesondere daraus, daß für die gleiche bestimmungsgemäße Verwendung - nämlich Realisierung eines mechanisch abgedichteten Gehäuses für eine Batterie - bei der zweiten Version eine geringere Anzahl von Einzelteilen als bei der ersten Version vorliegt und daß nur eine notwendige Horizontalbewegung als Demontageelement sowie Werkzeugeinsatz notwendig ist.

Bei komplexeren Gerätschaften, die aus einer Vielzahl von Einzelteilen bestehen, beispielsweise bei elektronischen Geräten oder insbesondere auch Haushaltsgeräten, wird das an obigem einfachen Beispiel verdeutlichte Analyseverfahren sinngemäß angewandt. Neben der rechnergestützten Berechnung der Zerlegegerechtheit lassen sich aus dem Vergleich der mit einer standardisierten Dokumentation erhaltenen Istkurven mit einer vorgegebenen Sollkurve auch relevante Aussagen über die mit den Zerlegungsvorgängen verbundenen Kosten ableiten. Beispielsweise können dafür die in Figur 4 oberhalb der Sollkurve verlaufenden Flächen herangezogen werden. Ebenso kann eine Ermittlung von Minimalkosten durch rechnergestützte Aufsummierung und Vergleich der Punktbewertungen erfolgen.

Insgesamt erlaubt das beschriebene Verfahren also, die Zerlegegerechtheit eines Produktes oder einer Produktgruppe bereits in der Konstruktionsphase zu bewerten, ggfs. natürlich auch zu jedem anderen Zeitpunkt. Wesentlich ist, daß für die Bewertung einzelne Zerlegeoperationen definiert sind. Die Bewertung eines technischen Produkts wird mit Hilfe der einzelnen Zerlegeoperationen und mit standardisierten Symbolen durchgeführt. Durch die mathematische Verknüpfung der einzelnen Symbole und eine Gewichtung der Zerlegeoperationen wird eine Gesamtbewertung für das Produkt bestimmt. Eine solche Gesamtbewertung kann durch Kurven oder aber auch durch summarische Bewertungszahlen repräsentiert werden, wozu ggfs. empirisch ermittelte Formeln oder theoretisch abgeleitete Algorithmen herangezogen werden. Derartige Bewertungszahlen können auch für einzelne Zerlegegruppen bestimmt werden.

Die Zerlegegerechtheit eines Produktes oder einer Produktgruppe ist nunmehr durch die Gesamtbewertung als technische Größe zu erfassen und damit unabhängig von der die Bewertung durchführenden Person. Die bei der Bewertung entstehende standardisierte Dokumentation ist selbsterklärend. Sie erlaubt, daß eine Bewertung der Zerlegegerechtheit von Produkten oder Produktgruppen automatisiert erfolgen kann. Durch die Bewertungspunktzahl ist somit ein objektiver Vergleich von verschiedenen Produktvarianten möglich. Daraus kann eine zielgerichtete Produktentwicklung hin zu zerlegegerechten Produkten betrieben werden.

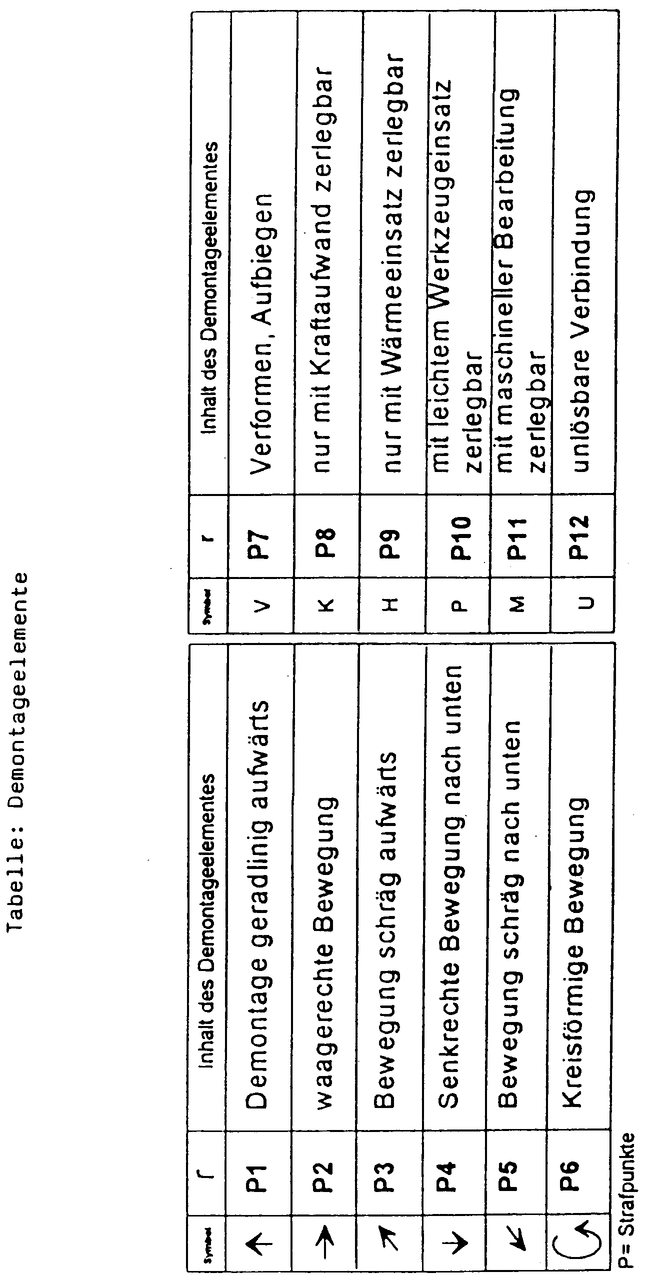

## Patentansprüche

1. Verfahren zur Entwicklung zerlegegerechter Produkte oder Produktgruppen, insbesondere von aus einer Mehrzahl von Einzelteilen zusammengebauten Gerätschaften, die nach Ablauf der Gebrauchsdauer durch mechanische Bewegungen von Produktteilen und/oder Technologieeinsatz an Produktteilen fraktioniert werden,
- bei welchem die Zerlegegerechtheit verschiedener Varianten der Produkte oder Produktgruppen ermittelt und zur Auswahl der einer Zerlegung am besten zugänglichen Variante miteinander verglichen wird,
- wobei die Ermittlung der Zerlegegerechtheit jeder Variante jeweils derart vorgenommen wird, daß einzelne Zerlegeschritte und unterschiedliche Maßnahmen als Technologieeinsatz definiert werden, daß jedem Zerlegeschritt und/oder Technologieeinsatz eine Wertigkeit zugeordnet wird und daß einzelne Zerlegeschritte und/oder Technologieeinsatz gleicher Wertigkeit zu Bewertungsgruppen zusammengefaßt werden und daraus eine Sollkurve für den Zerlegevorgang des Produktes oder einer Produktgruppe vorgegeben wird,
- wobei als Zerlegeschritte wenigstens folgende Arten von mechanischer Bewegung von Produktteilen festgelegt werden:
- senkrechte Bewegung geradlinig aufwärts
- waagrechte Bewegung
- Bewegung schräg aufwärts
- senkrechte Bewegung abwärts
- Bewegung schräg nach unten
- kreisförmige Bewegung,
- und wobei als Technologieeinsatz an Produktteilen folgende Maßnahmen festgelegt werden:
- Verformen, Aufbiegen
- nur mit Kraftaufwand zerlegbar
- nur mit Wärmeeinsatz zerlegbar
- mit leichtem Werkzeugeinsatz zerlegbar
- mit maschineller Bearbeitung zerlegbar
- unlösbare Verbindung.

2. Verfahren nach Anspruch 1, **dadurch gekennzeichnet,** daß die Abfolge der Zerlegeschritte als Einflußgröße auf die Sollkurve berücksichtigt wird.

3. Verfahren nach Anspruch 1, **dadurch gekennzeichnet,** daß bei einem vorgegebenen Produkt oder Produktgruppe eine Istkurve ermittelt wird und daß durch Vergleich zwischen Ist- und Sollkurve Aussagen über Zerlegegerechtheit des Produktes und/oder damit verbundener Zerlegekosten abgeleitet werden.

4. Verfahren nach Anspruch 3, **dadurch gekennzeichnet,** daß bei einem vorgegebenen Produkt oder Produktgruppe aus der Ist- und Sollkurve aller Zerlegeschritte summarische Bewertungszahlen ermittelt werden, wobei sich die Zerlegegerechtheit des Produktes oder der Produktgruppe durch Vergleich der Gesamtbewertungszahlen von Ist- und Sollzustand ergibt.

5. Verfahren nach Anspruch 1, **dadurch gekennzeichnet,** daß die einzelnen Zerlegeschritte und/oder der unterschiedliche Technologieeinsatz für eine zusammenfassende Bewertung durch signifikante Symbole verdeutlicht werden.

6. Verfahren nach Anspruch 1, **dadurch gekennzeichnet,** daß Zerlegeschritte mit Technologieeinsatz als Zerlegebewegung mit Zerlegeschwierigkeit umgedeutet werden.

7. Verfahren nach Anspruch 1, **dadurch gekennzeichnet,** daß Zerlegeschritte mit mechanischen Bewegungen und Technologieeinsatz zu Funktionsbegriffen wie beispielsweise Schnappverschluß, Drehverschluß oder dgl., zusammengefaßt werden.

8. Verfahren nach Anspruch 1, **dadurch gekennzeichnet,** daß Zerlegeschritte mit mechanischen Bewegungen und Technologieeinsatz zu Funktionsbegriffen in Bewertungsgruppen, beispielsweise fünf Bewertungsgruppen, zusammengefaßt werden.

9. Verfahren nach Anspruch 8, **dadurch gekennzeichnet,** daß die erfaßten Zerlegebewegungen und die Merkmale für Zerlegeschwierigkeiten gewichtet und mit einer Punktbewertung versehen werden.

10. Verfahren nach Anspruch 9, **dadurch gekennzeichnet,** daß die Sollkurve für die Zerlegung von Produkten von einem hohen Wert bei der ersten Bewertungsgruppe zu niedrigen Werten bei hohen Bewertungsgruppen, beispielsweise Null bei der letzten Bewertungsgruppe, verläuft.

11. Verfahren nach Anspruch 10, **dadurch gekennzeichnet,** daß die Anteile der einzelnen Bewertungsgruppen an der Gesamtmontage beispielsweise bei 70% für die erste Bewertungsgruppe, 20% für die zweite Bewertungsgruppe, 10% für die dritte Bewertungsgruppe 3 und 0% für die weiteren Bewertungsgruppen liegen.

12. Verfahren nach einem der vorhergehenden Ansprüche, dadurch **gekennzeichnet,** daß zur Ermittlung der Kosten bei Zerlegung vergleichbarer Produkte bzw. Produktgruppen die von den Istkurven gegenüber der Sollkurve abgedeckten Flächen verglichen werden.

13. Verfahren nach Anspruch 12, **dadurch gekennzeichnet,** daß eine Ermittlung von Minimalkosten bei Zerlegung vergleichbarer Produkte durch rechnergesteuerte Aufsummierung und Vergleich der Punktbewertungen erfolgt.

## Claims

1. Method of developing products or product groups designed for convenience of dismantling, in particular of equipment composed of a plurality of single parts, which is to be taken apart by mechanical movements of product parts and/or the use of technology on product parts at the end of the service life,
- in which the convenience of dismantling of different variants of the products or product groups is determined and compared to choose the variant which is most convenient for dismantling,
- the determination of the convenience of dismantling of each variant being carried out in each case in such a way that individual dismantling steps and different measures are defined as use of technology, that a ranking is assigned to each dismantling step and/or use of technology, and that individual dismantling steps and/or use of technology of equal ranking are combined to form valuation groups and, from these, a reference curve for the dismantling operation of the product or of a product group is stipulated,
- at least the following types of mechanical movement of product parts being specified as dismantling steps:
- vertical movement straight upwards
- horizontal movement
- movement obliquely upwards
- vertical movement downwards
- movement obliquely downwards
- circular movement,
- and the following measures being specified as use of technology on product parts:
- deformation, bending open
- can only be dismantled using force
- can only be dismantled using heat
- can be dismantled with use of simple tools
- can be dismantled by machine processing
- undetachable connection.

2. Method according to Claim 1, characterized in that the sequence of the dismantling steps is taken into account as an influencing parameter on the reference curve.

3. Method according to Claim 1, characterized in that an actual curve is determined for a given product or product group, and in that, by comparing the actual curve and the reference curve, statements can be derived on the convenience of dismantling of the product and/or the associated dismantling costs.

4. Method according to Claim 3, characterized in that summated valuation figures are determined from the actual and reference curves of all the dismantling steps for a given product or product group, the convenience of dismantling of the product or product group resulting from comparing the total valuation figures of the actual and reference states.

5. Method according to Claim 1, characterized in that the individual dismantling steps and/or the different use of technology are illustrated by significant symbols for a summarized valuation.

6. Method according to Claim 1, characterized in that dismantling steps with use of technology are interpreted as dismantling movement with dismantling difficulty.

7. Method according to Claim 1, characterized in that dismantling steps with mechanical movements and use of technology are combined to form functional terms such as, for example, snap-in closure, rotary closure or the like.

8. Method according to Claim 1, characterized in that dismantling steps with mechanical movements and use of technology are combined to form functional terms in valuation groups, for example five valuation groups.

9. Method according to Claim 8, characterized in that the dismantling movements recorded and the features defined for dismantling difficulties are weighted and given a points value.

10. Method according to Claim 9, characterized in that the reference curve for the dismantling of products ranges from a high value for the first valuation group to low values for high valuation groups, for example zero for the last valuation group.

11. Method according to Claim 10, characterized in that the proportions of the individual valuation groups from the total assembly are, for example, about 70% for the first valuation group, 20% for the second valuation group, 10% for the third valuation group 3 and 0% for the further valuation groups.

12. Method according to one of the preceding claims, characterized in that, to determine the costs for dismantling comparable products or product groups, the surfaces covered by the actual curves in relation to the reference curve are compared.

13. Method according to Claim 12, characterized in that a determination of minimum costs for dismantling comparable products is carried out by computer-controlled summation and comparison of the points values.

## Revendications

1. Procédé de développement de produits ou groupes de produits aptes au démontage, notamment d'appareils assemblés à partir d'un nombre multiple de pièces constitutives et qui, au terme de la durée d'utilisation, sont fractionnés par des mouvements mécaniques de parties du produit et/ou par une intervention technologique sur des parties du produit
― dans lequel les aptitudes au démontage de différentes variantes des produits ou groupes de produits sont déterminées et comparées les unes aux autres afin de sélectionner la variante qui sera la plus apte au démontage,
― le calcul de l'aptitude au démontage de chaque variante s'effectuant, à chaque fois, de manière à ce que des opérations de démontage individuelles et différentes mesures, en tant qu'interventions technologiques, soient définies, à ce qu'une valence soit attribuée à chaque opération de démontage et/ou intervention technologique et à ce que les opérations de démontage individuelles et/ou interventions technologiques de même valence soient regroupées en groupes d'évaluation et qu'une courbe théorique pour le procédé de démontage du produit ou d'un groupe de produits soit prédéfinie à partir de là,
― au moins les types suivants de mouvement mécanique de parties du produit étant définis en tant qu'opérations de démontage :
- mouvement vertical rectiligne vers le haut
- mouvement horizontal
- mouvement oblique vers le haut
- mouvement vertical vers le bas
- mouvement oblique vers le bas
- mouvement circulaire
― et les mesures suivantes étant définies en tant qu'intervention technologique sur des parties du produit :
- déformation, dépliage
- démontable seulement avec dépense d'énergie
- démontable seulement avec application de chaleur
- démontable avec intervention légère d'un outil
- démontable avec un traitement mécanique
- assemblage indétachable.

2. Procédé selon la revendication 1, caractérisé en ce que la succession des opérations de démontage est prise en compte en tant que valeur d'influence sur la courbe théorique.

3. Procédé selon la revendication 1, caractérisé en ce que, pour un produit ou groupe de produits donné, on détermine une courbe effective et en ce que, en comparant la courbe effective et la courbe théorique, on déduit des informations sur l'aptitude au démontage du produit et/ou sur les coûts de démontage liés à celui-ci.

4. Procédé selon la revendication 3, caractérisé en ce que, pour un produit ou groupe de produits donné, on calcule des chiffres d'évaluation obtenus par totalisation à partir de la courbe effective et de la courbe théorique de toutes les opérations de démontage, l'aptitude au démontage du produit ou du groupe de produits étant obtenue en comparant les chiffres d'évaluation d'ensemble de l'état effectif et de l'état théorique.

5. Procédé selon la revendication 1, caractérisé en ce que les opérations de démontage individuelles et/ou les diverses interventions technologiques sont illustrées par des symboles significatifs pour une évaluation à caractère global.

6. Procédé selon la revendication 1, caractérisé en ce que les opérations de démontage avec intervention technologique sont interprétées en tant que mouvement de démontage s'accompagnant d'une difficulté de démontage.

7. Procédé selon la revendication 1, caractérisé en ce que les opérations de démontage avec mouvements mécaniques et intervention technologique sont regroupées sous des termes fonctionnels tels que, par exemple, fermeture à enclenchement, fermeture rotative et autres termes similaires.

8. Procédé selon la revendication 1, caractérisé en ce que les opérations de démontage avec mouvements mécaniques et intervention technologique sont regroupées sous des termes fonctionnels dans des groupes d'évaluation, par exemple cinq groupes d'évaluation.

9. Procédé selon la revendication 8, caractérisé en ce que les mouvements de démontage saisis et les indices pour les difficultés de démontage sont pondérés et pourvus d'une évaluation par points.

10. Procédé selon la revendication 9, caractérisé en ce que la courbe théorique pour le démontage de produits passe d'une valeur élevée pour le premier groupe d'évaluation à des valeurs faibles pour les groupes d'évaluation à indices supérieurs, par exemple une valeur nulle pour le dernier groupe d'évaluation.

11. Procédé selon la revendication 10, caractérisé en ce que la proportion prise par les différents groupes d'évaluation dans le montage d'ensemble est, par exemple, de 70% pour le premier groupe d'évaluation, 20% pour le deuxième groupe d'évaluation, 10% pour le troisième groupe d'évaluation, 3 et 0% pour les autres groupes d'évaluation.

12. Procédé selon l'une des revendications précédentes, caractérisé en ce que, pour calculer les coûts lors du démontage de produits resp. groupes de produits comparables, on compare les aires couvertes par les courbes effectives par rapport à la courbe théorique.

13. Procédé selon la revendication 12, caractérisé en ce qu'un calcul des coûts minimums, lors du démontage de produits comparables, est effectué par la totalisation commandée par ordinateur et la comparaison des évaluations par points.
